# EUROPÄISCHE PATENTSCHRIFT

(11) **EP 0 885 246 B1**
(45) Veröffentlichungstag und Bekanntmachung des Hinweises auf die Patenterteilung: **13.10.1999**
(21) Anmeldenummer: 97908186.6
(22) Anmeldetag: 06.03.1997
(51) Int. Cl.: C08F 2/20, C08F 220/38, C09D 133/24, D21H 17/34

(54) **VERNETZBARE SCHUTZKOLLOIDE**
CROSS-LINKABLE PROTECTIVE COLLOIDS
COLLOIDES PROTECTEURS RETICULABLES

(30) Priorität: 07.03.1996 DE 19608911
(43) Veröffentlichungstag der Anmeldung: 23.12.1998
(73) Patentinhaber: Wacker-Chemie GmbH, 81737 München (DE)
(72) Erfinder: KOHLHAMMER, Klaus, D-84533 Marktl (DE); KOEGLER, Gerhard, D-84508 Hirten (DE); ROCKINGER, Monika, 84359 Simbach/Inn (DE); DOBLER, Walter, D-84367 Tann (DE)
(74) Vertreter: Schuderer, Michael, Dr.
(86) Internationale Anmeldenummer: EP9701136
(87) Internationale Veröffentlichungsnummer: WO9732904

(56) Entgegenhaltungen:
- EP-A- 0 029 970
- FR-A- 2 003 769
- GB-A- 2 099 833

## Beschreibung

Die Erfindung betrifft vernetzbare Schutzkolloide, Verfahren zur Polymerisation von ethylenisch ungesättigten Monomeren unter Verwendung der vernetzbaren Schutzkolloide, sowie damit erhältliche Polymerisate bzw. Polymerisatdispersionen und deren Verwendung.

Die Stabilisierung von Polymerdispersionen mit Schutzkolloiden und Tensiden ist bekannt. Einen Überblick über die gebräuchlichen Stabilisatoren findet sich beispielsweise in G. Schulz "Die Kunststoffe", C. Hanser Verlag, 1964, oder in J. C. Jonson "Emulsifiers and Emulsifying Techniques" Noyes Data Corp., Park Ridge, New Jersey, 1979, sowie in Ullmann, "Encyklopädie der technischen Chemie", 4. Auflage, Band 10, Verlag Weinheim, 1980.

Diese Verbindungen zeichnen sich durch einen hydrophilen und einen hydrophoben Part im Molekül aus, wobei letzterer zur Verankerung im Polymerharz dient. Es wird allgemein angenommen, daß diese oberflächenaktiven Substanzen vornehmlich an der Grenzschicht zwischen den Polymerpartikeln und der wäßrigen Flotte angeordnet sind. Damit wird die Gesamtoberfläche des Systems und somit letztendlich auch das Eigenschaftsbild einer Polymerdispersion stark durch diese Stabilisatoren geprägt. Die Wahl eines geeigneten Emulgierhilfsmittels bedingt somit letztendlich die gewünschten Endeigenschaften einer Polymerdispersion.

Die Verwendung oberflächenaktiver Polymere als Schutzkolloide wird auch in der neueren Patentliteratur häufig beschrieben. In Abweichung von den klassischen polymeren Schutzkolloiden wie Polyvinylalkohol, Cellulosederivate oder Gelatine werden dabei neue synthetische Wege beschritten und wasserlösliche Polymere mit ionischen Gruppen, sogenannte Polyelektrolyte als Schutzkolloide eingesetzt.

Aus der DE 4212768 (US-A 5385971) ist ein ungesättigter Polyester aus Malein- bzw-Fumarsäure-Polethylenglycolester bekannt, der zur Stabilisierung von Emulsionspolymerisaten herangezogen wird. Die damit hergestellten Polymerdispersionen zeichnen sich durch gute Frost- und Elektrolytstabilität aus. In der DE-A 4304014 (WO-A 94/18249) wird ein Verfahren zu kontinuierlichen Polymerisation von Acrylpolymeren mit niedrigem Polymerisationsgrad in wäßrigem Medium beschrieben. Die so erhaltenen Polymeren eignen sich als Dispergierhilfsmittel für Pigmente und von Bindemitteln. Nachteilig bei diesen Produkten ist jedoch eine gewisse Verdickerwirkung, die für viele Applikationen unerwünscht ist.

Die Stabilisierung von Dispersionen mit Polyelektrolyten ist auch aus der DE 2540468 (GB-A 1551126) bekannt, in der den resultierenden Dispersionen gute Stabilität hinsichtlich Salz- und Scherbeanspruchung zugeschrieben wird. In der WO-A 92/03482 werden oligomere Carbonsäuren als Stabilisatoren für die Emulsionspolymerisation von radikalisch polymerisierbaren Monomeren beschrieben, die sich besonders für die Herstellung von Bindemitteln für Druckfarben eignen sollen. Bindemitteldispersionen für Textilanwendungen werden in der US-A 5314943 beansprucht. Die darin beschriebenen Polymerdispersionen sind mittels eines carbonsäuregruppenhaltigen Schutzkolloids stabilisiert. Ihnen wird ein schnelles Abbindeverhalten zugeschrieben.

Zur Herstellung von Bindemitteln, welche zu sehr stabilen Polymerfilmen führen, beispielsweise in der Anwendung als Klebe- oder Beschichtungsmittel, werden häufig wäßrige Polymerisatdispersionen von vernetzbaren Polymerisaten eingesetzt. Weit verbreitet sind vernetzbare Polymerisate mit N-Methylolfunktionellen Comonomereinheiten als Vernetzergruppen. Derartige vernetzbare Polymerisate sind beispielsweise aus der DE-C 2512589 (US-A 4044197) bekannt. Die Festigkeit damit erhältlicher Polymerfilme läßt sich aber nicht ohne weiteres durch Erhöhung des Anteils an N-Methylol-funktionellen Einheiten im Polymerisat steigern. Es wurde daher im Stand der Technik vorgeschlagen, die vernetzende Wirkung derartiger Polymerisate durch spezielle Herstellungsverfahren zu erhöhen (EP-B 205862) oder Comonomere mit blockierter N-Methylolfunktion zu polymerisieren (EP-A 261378).

Vor diesem Stand der Technik bestand daher die Aufgabe Polymerisate bzw. wäßrige Polymerisatdispersionen zur Verfügung zu stellen, welche Polymerfilme mit hoher mechanischer Festigkeit und hoher Wasser- und Lösemittelfestigkeit bilden.

Die Aufgabe wurde gelöst durch die Bereitstellung eines wasserlöslichen, vernetzbaren Polymeren mit Schutzkolloideigenschaften, das zur Selbstvernetzung befähigte funktionelle Gruppen, insbesondere N-Methylol-Gruppen, in die Molekülkette eingebaut hat.

Wasserlösliche Polymere mit hohem NMA-Gehalt haben die Tendenz zu hohen Molekulargewichten mit entsprechend hoher Viskosität der wäßrigen Lösung. Wasserlösliche Acrylverbindungen wie Acrylsäure oder das als Vernetzer gebräuchliche N-Methylolacrylamid neigen nämlich zu sehr hohen Polymerisationsgraden, was eine weit verbreitete Verwendung aufgrund der resultierenden hohen Viskositäten stark beeinträchtigt. Beispielsweise beschreibt die EP-B 94898 (US-A 4736005) die Herstellung von sehr hochmolekularen (MG > 1,000,000) Terpolymeren aus 30 bis 95 % Dimethylacrylamid (DMA), 0.1 bis 10 % N-Methylolacrylamid (NMA) und 4 bis 50 % Acrylamidomethylpropansulfonat (AMPS) und deren Verwendung als rheologische Additive in der Erdölförderung.
Ein weiterer Nachteil von Polyelektrolyten auf der Basis wasserlöslicher Monomere besteht darin, daß solche Polyelektrolyte häufig mit einer Polymerisatdispersion unverträglich sind und sich die wäßrige Polyelektrolytlösung als Serum von der Polymerisatdispersion abtrennt.

Überraschenderweise wurde gefunden, daß durch die Copolymerisation von N-Methylolacrylamid mit Sulfonsäure- oder Sulfonatgruppenhaltigen Acrylverbindungen deutlich niedrigere Molekulargewichte erzielt werden können. Außerdem wurde überraschend gefunden, daß bereits durch Copolymerisation von nur geringen Mengen an hydrophoben Comonomeren deutlich niedrigere Oberflächenspannungen und niedrigere Viskositäten resultieren.

Gegenstand der Erfindung sind wasserlösliche, vernetzbare Schutzkolloide mit einem Molekulargewicht von < 500000 enthaltend
a) 20 bis 95 Gew% Sulfonsäure- oder Sulfonatgruppenhaltige Monomereinheiten,
b) mindestens 4 Gew% N-Methylol- oder N-Alkoxymethylgruppenhaltige Monomereinheiten,
c) 0.1 bis 20 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind, und
wobei der Anteil an Sulfonsäure-/Sulfonatgruppenhaltigen Monomereinheiten gegebenenfalls zu bis zu 50 Gew%, bezogen auf den Gewichtsanteil der Monomereinheiten a), durch Carboxylgruppenhaltige Monomereinheiten d) oder Amidgruppenhaltige Monomereinheiten e) substituiert werden kann.

Bevorzugt werden wasserlösliche, vernetzbare Schutzkolloide mit einem Molekulargewicht von ≤ 500000 enthaltend
a) 30 bis 87 Gew% Sulfonsäure- oder Sulfonatgruppenhaltige Monomereinheiten,
b) 12 bis 60 Gew% N-Methylol- oder N-Alkoxymethylgruppenhaltige Monomereinheiten,
c) 0.1 bis 10 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind.

Besonders bevorzugt werden wasserlösliche, vernetzbare Schutzkolloide mit einem Molekulargewicht von ≤ 500000 enthaltend
a) 70 bis 87 Gew% Sulfonsäure- oder Sulfonatgruppenhaltige Monomereinheiten,
b) 12 bis 25 Gew% N-Methylol- oder N-Alkoxymethylgruppenhaltige Monomereinheiten,
c) 1 bis 5 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind.

Geeignete Monomereinheiten a) sind beispielsweise wasserlösliche, radikalisch polymerisierbare, ethylenisch ungesättigte Verbindungen, die Sulfonsäure- bzw. Sulfonatgruppen -SO₃M, mit M = H, Alkali-, Ammonium- oder Erdalkaliion enthalten. Bevorzugt werden 2-Acrylamido-2-methylpropansulfonsäure (AMPS), Styrolsulfonsäure, (Meth-)Acrylsäure-Sulfoalkylester, Itaconsäure-Sulfoalkylester, vorzugsweise jeweils mit C₁- bis C₆-Alkylrest, Vinylsulfonsäure und deren Ammonium-, Alkali- oder Erdalkalisalze. Besonders bevorzugt werden 2-Acrylamido-2-methylpropansulfonsäure (AMPS), Styrolsulfonsäure, Acrylsäuresulfopropylester, Itaconsäuresulfopropylester, Vinylsulfonsäure und deren Ammonium-, Natrium-, Kalium- und Calciumsalze.

Geeignete Monomereinheiten b) sind beispielsweise wasserlösliche, radikalisch polymerisierbare, ethylenisch ungesättigte Verbindungen, die N-Methylolgruppen (-NH-CH₂OH) oder deren veretherte Derivate (-NH-CH₂OR mit R = C₁- bis C₆-Alkyl) enthalten. Bevorzugt werden N-Methylolacrylamid (NMA), N-Methylolmethacrylamid (NMMA), N-(Isobutoxymethyl)-acrylamid (IBMA), N-(Isobutoxymethyl)-methacrylamid, N-(n-Butoxymethyl)-acrylamid (NBMA). Besonders bevorzugt werden N-Methylolacrylamid, N-(Isobutoxymethyl)-acrylamid.

Geeignete Monomereinheiten c) sind radikalisch (co-)polymerisierbare, ethylenisch ungesättigte Verbindungen, die bei 23°C mit weniger als 2 Gew% in Wasser löslich sind, sowie hydrophobe Endgruppen von Initiatorresten oder Reglermolekülen mit jeweils mehr als 8 C-Atomen. Bevorzugt werden Ester der Acrylsäure oder Methacrylsäure mit mehr als 3 C-Atomen, wie Methylmethacrylat, Vinylaromaten wie Styrol oder Vinyltoluol, Olefine wie Ethylen oder Propylen, Vinylhalogenide wie Vinylchlorid, Vinylester von aliphatischen Carbonsäuren mit mehr als 2 C-Atomen. Als Endgruppe von Reglermolekülen ist der Dodecylrest von Dodecylmercaptan bevorzugt. Besonders bevorzugt werden Methylmethacrylat, Styrol, Vinylpropionat, Isopropenylacetat (1-Methylvinylacetat), Vinyllaurat, Vinylester von α-verzweigten Monocarbonsäuren mit 5 bis 10 C-Atomen wie VeoVa9^{R} oder VeoVa10^{R}.

Geeignete Carboxylgruppenhaltige Monomere d) sind wasserlösliche, radikalisch polymerisierbare, ethylenisch ungesättigte Verbindungen, die Carboxylgruppen -COOM, mit M = H, Alkali-, Ammonium- oder Erdalkaliionen, enthalten. Bevorzugt werden Acrylsäure, Methacrylsäure, Crotonsäure, Itaconsäure. Geeignete Amidgruppenhaltige Monomere e) sind wasserlösliche, radikalisch polymerisierbare, ethylenisch ungesättigte Verbindungen, die Amidgruppen -CONH₂ enthalten. Bevorzugt werden Acrylamid und Methacrylamid, besonders bevorzugt Acrylamid.

Wasserlöslich bedeutet dabei generell, daß die Löslichkeit in Wasser bei 23°C mindestens 10 Gew% beträgt. Das Molekulargewicht ist als Gewichtsmittel, bestimmt mittels Gelpermeationsverfahren (GPC) gegen Natrium-Polystyrolsulfonat-Standards, angegeben.

Die Herstellung der erfindungsgemäßen Schutzkolloide erfolgt vorzugsweise durch radikalische Polymerisation in wäßriger Lösung bei einer Reaktionstemperatur von vorzugsweise 40°C bis 80°C. Die Polymerisation kann unter Vorlage aller oder einzelner Bestandteile des Reaktionsgemisches erfolgen, oder unter teilweiser Vorlage und Nachdosierung der oder einzelner Bestandteile des Reaktionsgemisches, oder nach dem Dosierverfahren ohne Vorlage durchgeführt werden.

Die Initiierung erfolgt mittels der gebräuchlichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, Wasserstoffperoxid, Kalium-, Natrium- und Ammoniumperoxodiphosphat. Gegebenenfalls können die genannten radikalischen Initiatoren auch in bekannter Weise mit 0.01 bis 1.0 Gew%, bezogen auf das Gesamtgewicht der Monomeren, Reduktionsmittel kombiniert werden, wobei in diesem Fall bei niedrigeren Temperaturen polymerisiert werden kann. Geeignet sind zum Beispiel Alkali-Formaldehydsulfoxylate und Ascorbinsäure. Bei der Redoxinitiierung werden dabei vorzugsweise eine oder beide Redox-Katalysatorkomponenten während der Polymerisation dosiert.

Der für die Polymerisation gewünschte pH-Bereich, der im allgemeinen pH ≥ 2,5 beträgt, kann in bekannter Weise durch Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

In einer besonders bevorzugten Ausführungsform wird ein Teil des Gemisches der Comonomeren a), b), c) und gegebenenfalls d) und e) als wäßrige Lösung vorgelegt und die Vorlage auf die Reaktionstemperatur erwärmt. Nach Erreichen der Polymerisationstemperatur wird der Radikalstarter und das restliche Comonomergemisch, jeweils in wäßriger Lösung, langsam zudosiert. Nach Dosierende wird die Polymerisation durch Erwärmen des Ansatzes auf 85°C bis 95°C vervollständigt.

In der am meisten bevorzugten Ausführungsform wird zumindest ein Teil der sulfonatgruppenhaltigen Comonomere a), im allgemeinen 5 bis 60 Gew%, bezogen auf das Gesamtgewicht der Comonomere a), sowie ein Teil der N-Methylolfunktionellen Comonomere b), im allgemeinen 5 bis 60 Gew%, bezogen auf das Gesamtgewicht der Comonomere a), als wäßrige Lösung vorgelegt und die Restmenge der Comonomere a) und b) zudosiert.

Die Copolymerisate werden vorzugsweise in Form deren wäßrigen Lösungen verwendet. Je nach Anwendungen werden vorzugsweise Festgehalte von 15 bis 25 Gew% eingestellt.

Ein weiterer Gegenstand der Erfindung sind Verfahren zur Herstellung von schutzkolloidstabilisierten wäßrigen Polymerisatdispersionen durch radikalische Polymerisation von ethylenisch ungesättigten Monomeren nach dem Suspensions- oder Emulsionspolymerisationsverfahren, dadurch gekennzeichnet, daß die Polymerisation in Gegenwart eines oder mehrerer Schutzkolloide durchgeführt wird, mit einem Molekulargewicht von ≤ 500000 enthaltend
a) 20 bis 95 Gew% Sulfonsäure- oder Sulfonatgruppenhaltige Monomereinheiten,
b) mindestens 4 Gew% N-Methylol- oder N-Alkoxymethylgruppenhaltige Monomereinheiten,
c) 0.1 bis 20 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind, und
wobei der Anteil an Sulfonsäure-/Sulfonatgruppenhaltigen Monomereinheiten gegebenenfalls zu bis zu 50 Gew%, bezogen auf den Gewichtsanteil der Monomereinheiten a), durch Carboxylgruppenhaltige Monomereinheiten d) oder Amidgruppenhaltige Monomereinheiten e) substituiert werden kann.

Die Polymerisation wird in Gegenwart von einem oder mehreren Monomeren aus der Gruppe der Vinylester von unverzweigten oder verzweigten Carbonsäuren mit 1 bis 18 C-Atomen, der Ester von Acrylsäure und Methacrylsäure mit unverzweigten oder verzweigten Alkoholen mit 1 bis 18 C-Atomen, der Vinylaromaten, der Vinylhalogenide und der Olefine durchgeführt.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 oder 9 bis 10 C-Atomen, beispielsweise VV5^{R}, VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat, 2-Ethylhexylmethacrylat. Besonders bevorzugt sind Methylacrylat, Methylmethacrylat, n-Butylacrylat und 2-Ethylhexylacrylat.

Bevorzugte Vinylaromaten sind Styrol, α-Methylstyrol, o-Chlorstyrol oder Vinyltoluole.

Bevorzugte Vinylhalogenide sind Vinylchlorid und Vinylidenchlorid.

Bevorzugte Olefine sind Ethylen, Propylen, 1,3-Butadien, Isopren.

Gegebenenfalls können noch 0.05 bis 30.0 Gew%, vorzugsweise 0.5 bis 15 Gew%, jeweils bezogen auf das Gesamtgewicht der Monomeren, ein oder mehrere Hilfsmonomere zur Verbesserung der Wasserlöslichkeit, zur Vernetzung oder zur Modifikation der Haftungseigenschaften der Polymerisate zugegeben werden.

Geeignete Hilfsmonomere zur Verbesserung der Wasserlöslichkeit sind beispielsweise α,β-monoethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und/oder N-Vinylpyrrolidon.

Vernetzend wirkende Monomere werden vorzugsweise zu 0.5 bis 5.0 Gew%, bezogen auf das Gesamtgewicht der Monomere, eingesetzt. Beispiele hierfür sind N-Methylolacrylamid, N-Methylolmethacrylamid; N-(Alkoxymethyl)acrylamide oder N-(Alkoxymethyl)methacrylamide mit einem C₁- bis C₆-Alkylrest, wie N-(isobutoxymethyl)-acrylamid (IBMA), N-(isobutoxymethyl)-methacrylamid (IBMMA), N-(n-butoxymethyl)-acrylamid (NBMA), N-(n-butoxymethyl)-methacrylamid (NBMMA); mehrfach ethylenisch ungesättigten Comonomere wie Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat.

Zur Modifikation der Haftungseigenschaften geeignete Comonomereinheiten sind beispielsweise Methacrylsäure- und Acrylsäurehydroxyalkylester wie Hydroxyethyl-, Hydroxypropyl- oder Hydroxybutyl-acrylat oder -methacrylat sowie Verbindungen wie Diacetonacrylamid und Acetylacetoxyethylacrylat oder -methacrylat.

Die Herstellung der wäßrigen Polymerdispersionen erfolgt nach dem Verfahren der wäßrigen Emulsionspolymerisation oder nach dem Verfahren der wäßrigen Suspensionspolymerisation in Gegenwart von 0.1 bis 20 Gew%, vorzugsweise 0.1 bis 5.0 Gew%, eines oder mehrerer der erfindungsgemäßen vernetzbaren Schutzkolloide, jeweils bezogen auf das Gesamtgewicht der Monomere. Vorzugsweise wird nach dem Emulsionspolymerisationsverfahren gearbeitet, welches nachfolgend näher erläutert wird.

Die Polymerisationstemperatur beträgt in der Regel 35 - 95°C, bevorzugt 40 - 80°C. Die Polymerisation kann im Batchverfahren, wobei alle Komponenten im Reaktor vorgelegt werden, und im Dosierverfahren, wobei einzelne oder mehrere Komponenten während der Polymerisation zugeführt werden, durchgeführt werden. Mischtypen mit Vorlage und Dosierung werden bevorzugt.

Die Dosierungen können separat (räumlich und zeitlich) durchgeführt werden oder die zu dosierenden Komponenten können alle oder teilweise voremulgiert dosiert werden.

Die vernetzbaren Schutzkolloide können vorgelegt oder dosiert, oder auf Vorlage und Dosierung verteilt werden. Bevorzugt werden die vernetzbaren Schutzkolloide, in Form deren wäßrigen Lösungen, zudosiert. Die Dosierungen können mit konstanter Rate und mit wechselnden Raten durchgeführt werden. Für den Einsatz des Initiatorsystems gelten die gleichen Maßgaben wie für den Einsatz der anderen Reaktionskomponenten.

Sollen beispielsweise gasförmige Reaktionskomponenten eingesetzt werden, kann die Emulsionspolymerisation auch unter erhöhtem Druck durchgeführt werden. Wird unter Druck gearbeitet, zum Beispiel beim Einsatz der Monomeren Vinylchlorid oder Ethylen, sind Drücke von 5 bar bis 100 bar bevorzugt. Entscheidend ist beispielsweise die Zielmenge an Ethylen, die einpolymerisiert werden soll.

Die erfindungsgemäß zu verwendenden vernetzbaren Schutzkolloide können sowohl allein als auch in Kombination mit Emulgatoren und/oder weiteren Schutzkolloiden eingesetzt werden. In einer bevorzugten Ausführungsform wird neben dem erfindungsgemäßen vernetzbaren Schutzkolloid noch zusätzlich ein oder mehrere Emulgatoren eingesetzt.

Als begleitende Emulgatoren kommen anionische, kationische und auch nichtionische Emulgatoren in Betracht. Falls in Gegenwart von Emulgatoren polymerisiert wird, beträgt deren Menge vorzugsweise bis zu 4 Gew%, bezogen auf das Gesamtgewicht der Monomerphase. Vorzugsweise werden anionische und nichtionische Emulgatoren eingesetzt. Gebräuchliche Emulgatoren sind beispielsweise ethoxylierte Fettalkohole mit C₈-C₃₆-Alkylrest und einem Ethoxylierungsgrad (EO-Grad) von 3 bis 50; ethoxylierte Mono-, Di- und Trialkylphenole mit C₄-C₁₀-Alkylrest und einem EO-Grad von 3 bis 50; Alkalimetallsalzen von Di-C₄-C₁₂-Alkylestern der Sulfobernsteinsäure. Geeignet sind auch Alkalimetall- und Ammoniumsalze von C₈-C₁₂-Alkylsulfaten, von ethoxylierten Alkanolen mit C₁₂-C₁₈-Alkylrest und einem EO-Grad von 3 bis 30, von ethoxylierten C₄-C₁₀-Alkylphenolen mit einem EO-Grad von 3 bis 50, von C₁₂-C₁₈-Alkylsulfonsäuren, von C₉-C₁₈-Alkylarylsulfonsäuren und von Sulfonaten ethoxylierter, linearer und verzweigter C₈-C₃₆-Alkylalkohole mit einem EO-Grad von 3 bis 50.

Geeignete Schutzkolloide, welche gegebenenfalls zusätzlich zu den erfindungsgemäßen vernetzbaren Schutzkolloiden eingesetzt werden können sind Polyvinylalkohole, teilverseifte Polyvinylacetate, Celluloseether wie Methyl-, Methylhydroxypropyl-, Hydroxyethyl-Cellulose, Carboxymethyl-Cellulosen.

Die Initierung der Polymerisation erfolgt mit den für die Emulsionspolymerisation gebräuchlichen wasserlöslichen, thermischen Initiatoren oder Redox-Initiator-Kombinationen. Beispiele für thermische Initiatoren sind organische Peroxide wie tert.-Butylhydroperoxid, Cumylhydroperoxid, oder Peroxodisulfate wie Kaliumperoxodisulfat, Ammoniumperoxodisulfat, oder H₂O₂ oder Azoverbindungen wie Azodiisobutyronitril. Als Redox-Initiatoren verwendet man bevorzugt Wasserstoffperoxid, tert.-Butylhydroperoxid, Kaliumperoxodisulfat oder Ammoniumperoxodisulfat in Kombination mit Hydroxymethansulfinsäure, Ascorbinsäure oder Natriumsulfit als Reduktionsmittel. Zweckmäßigerweise wird die Reaktivität des Initiatorsystems durch Zusatz von Metallionen, die in mehreren Wertigkeitsstufen auftreten können, erhöht. Bevorzugt verwendet man Fe²⁺- oder Ce²⁺-Ionen. Die Initiatormenge beträgt vorzugsweise 0.01 bis 1.0 Gew%, bezogen auf das Gesamtgewicht der Monomerphase.

Zur Steuerung des Molekulargewichts können während der Polymerisation regelnde Substanzen eingesetzt werden. Sie werden üblicherweise in Mengen zwischen 0.01 bis 5.0 Gew%, bezogen auf die zu polymerisierenden Monomeren, eingesetzt und separat oder auch vorgemischt mit Reaktionskomponenten dosiert. Beispiele solcher Substanzen sind Dodecylmercaptan, Mercaptopropionsäure, Mercaptopropionsäuremethylester, Isopropanol und Acetaldehyd.

Die mit dem erfindungsgemäßen Verfahren erhältlichen wäßrigen Dispersionen haben einen Feststoffgehalt von 30 bis 75 Gew%, vorzugsweise von 40 bis 65 Gew%.

Ein weiterer Gegenstand der Erfindung sind wäßrige Polymerdispersionen von Polymerisaten ethylenisch ungesättigter Monomere, welche 0.1 bis 20 Gew%, bezogen auf den Festgehalt an Polymerisat, des erfindungsgemäßen vernetzbaren Schutzkolloids enthalten.

Diese Polymerdispersionen können mit der gerade diskutierten erfindungsgemäßen Verfahrensweise hergestellt werden. Darüberhinaus können die erfindungsgemäßen wäßrigen Polymerdispersionen auch dadurch hergestellt werden, daß zu konventionell hergestellten Polymerdispersionen 0.1 bis 20 Gew%, vorzugsweise 0.1 bis 5 Gew% des erfindungsgemäßen vernetzbaren Schutzkolloids, jeweils bezogen auf den Festgehalt an Polymerisat, zugegeben werden. Bei nachträglicher Zugabe kann das erfindungsgemäße Schutzkolloid in fester Form zugegeben werden; vorzugsweise wird es als wäßrige Lösung zugemischt.

Bevorzugt werden Polymerdispersionen der nachfolgenden Polymerisate:
Bevorzugte Vinylester-Polymerisate enthalten als Monomereinheiten, jeweils bezogen auf das Gesamtgewicht des Polymerisats:
50 bis 100 Gew% Vinylester, insbesonders Vinylacetat;
50 bis 95 Gew% Vinylester, insbesonders Vinylacetat sowie 5 bis 50 Gew% α-Olefin, insbesonders Ethylen;
20 bis 79 Gew% Vinylester, insbesonders Vinylacetat, sowie 1 bis 30 Gew% Ethylen und 20 bis 49 Gew% Vinylchlorid;
50 bis 75 Gew% Vinylacetat, 1 bis 30 Gew% Vinyllaurat oder Vinylester einer α-verzweigten Carbonsäure, insbesonders Versaticsäure-Vinylester, sowie 5 bis 40 Gew% Ethylen;
70 bis 99 Gew% Vinylacetat und 1 bis 30 Gew% Vinyllaurat oder Vinylester einer α-verzweigten Carbonsäure, insbesonders Versaticsäure-Vinylester,
70 bis 99 Gew% Vinylester, insbesonders Vinylacetat, und 1 bis 30 Gew% Acrylsäureester, insbesonders n-Butylacrylat oder 2-Ethylhexylacrylat;
50 bis 75 Gew% Vinylacetat, 1 bis 30 Gew% Acrylsäureester, insbesonders n-Butylacrylat oder 2-Ethylhexylacrylat, sowie 5 bis 40 Gew% Ethylen;
30 bis 75 Gew% Vinylacetat, 1 bis 30 Gew% Vinyllaurat oder Vinylester einer α-verzweigten Carbonsäure, insbesonders Versaticsäure-Vinylester, 1 bis 30 Gew% Acrylsäureester, insbesonders n-Butylacrylat oder 2-Ethylhexylacrylat, sowie 5 bis 40 Gew% Ethylen.

Bevorzugte (Meth)acrylsäureester-Polymerisate enthalten als Monomereinheiten, jeweils bezogen auf das Gesamtgewicht des Polymerisats: 35 bis 65 Gew% Methylmethacrylat, 65 bis 35 Gew% n-Butylacrylat und/oder 2-Ethylhexylacrylat;
35 bis 65 Gew% Styrol und 65 bis 35 Gew% n-Butylacrylat und/oder 2-Ethylhexylacrylat.

Besonders bevorzugt werden Vinylester-Polymerisate und (Meth)acrylsäureester-Polymerisate der genannten Zusammensetzung, welche noch 0.5 bis 5.0 Gew%, bezogen auf das Gesamtgewicht der Polymerisate, vernetzend wirkende Comonomereinheiten aus der Gruppe N-Methylolacrylamid, N-Methylolmethacrylamid; N-(Alkoxymethyl)acrylamide oder N-(Alkoxymethyl)methacrylamide mit einem C₁- bis C₆-Alkylrest, wie N-(isobutoxymethyl)-acrylamid (IBMA), N-(isobutoxymethyl)-methacrylamid (IBMMA), N-(n-butoxymethyl)-acrylamid (NBMA), N-(n-butoxymethyl)-methacrylamid (NBMMA) enthalten.

Am meisten bevorzugt werden Vinylacetat-Ethylen-Copolymerisate mit einem Ethylengehalt von 5 bis 50 Gew% und einem Gehalt von 0.5 bis 5.0 Gew% eines oder mehrerer Comonomere aus der Gruppe N-Methylolacrylamid, N-Methylolmethacrylamid, N-(isobutoxymethyl)-acrylamid (IBMA), N-(isobutoxymethyl)-methacrylamid (IBMMA), N-(n-butoxymethyl)-acrylamid (NBMA), N-(n-butoxymethyl)-methacrylamid (NBMMA).

Die genannten wäßrigen Polymerdispersionen von Polymerisaten ethylenisch ungesättigter Monomere, welche 0.1 bis 20 Gew%, bezogen auf den Festgehalt an Polymerisat, des erfindungsgemäßen vernetzbaren Schutzkolloids enthalten, eignen sich auch zur Herstellung von in Wasser redispergierbaren Polymerpulvern.

Zur Herstellung der redispergierbaren Polymerpulver-Zusammensetzungen werden die wäßrigen Dispersionen getrocknet. Vorzugsweise werden die Dispersionen sprühgetrocknet oder gefriergetrocknet.

Am meisten bevorzugt ist die Sprühtrocknung der Dispersionen. Hierbei kann auf die bekannten Vorrichtungen, wie zum Beispiel Versprühen durch Ein-, Zwei- oder Mehrstoffdüsen oder mit einer rotierenden Scheibe, in einem gegebenenfalls erhitzten Trockengasstrom, vorzugsweise Luft, zurückgegriffen werden. Im allgemeinen werden Temperaturen über 250°C als Eintrittstemperatur des Trockengases nicht angewandt. Die Austrittstemperaturen des Trockengases liegen im allgemeinen im Bereich von 45 bis 100°C, bevorzugt 55 bis 90°C, je nach Anlage, Polymerzusammensetzung und gewünschtem Trocknungsgrad.

Zur Trocknung werden die Dispersionen auf einen Festgehalt von 10 bis 75 Gew%, vorzugsweise 30 bis 65 Gew% eingestellt. Der Festgehalt ist abhängig vom gewählten Trocknungsverfahren und von Art und Menge weiterer Zusatzstoffe, welche bei der Trocknung zugegeben werden. Für die bevorzugte Sprühtrocknung hat sich eine Viskosität des Gesamtsystems von bis zu 1000 mPa.s bewährt.

Beispielsweise können der Dispersion vor der Trocknung Verdüsungshilfen zugegeben werden. Die Zugabe erfolgt vorzugsweise in Form deren wäßriger Lösungen, in Mengen von vorzugsweise 5 bis 40 Gew%, insbesondere 5 bis 20 Gew%, bezogen auf das Polymerisat. Die optimale Menge richtet sich nach der Stabilisierung der Dispersion, der Glasübergangstemperatur des enthaltenen Polymerisats und den gewünschten Pulvereigenschaften.

Als Verdüsungshilfen eignen sich unter anderem, allein oder in Kombination, abgebaute oder modifizierte Stärken, Stärkederivate, Cellulosederivate und wasserlösliche Polymere, insbesondere solche mit hohen Glasübergangstemperaturen von mindestens 50°C. Beispiele für derartige, vielfach handelsübliche Polymere sind: Vinylalkohol-Copolymere (Polyvinylalkohol) mit einem Hydrolysegrad von 85 bis 94 Mol% und einer Höppler-Viskosität, bestimmt in 4 %-iger Lösung, von 3 bis 25 mPa.s; wasserlösliche sulfonatgruppenhaltige Kondensate aus Melamin und Formaldehyd oder Naphthalin und Formaldehyd; Phenolsulfonsäure-Formaldehyd-Kondensate; Copolymerisate aus Styrol und Maleinsäure und/oder Itaconsäure und deren Ester; wasserlösliche Copolymere aus olefinisch ungesättigten Säuren und Alkenen.

Bei der Verdüsung hat sich vielfach ein Gehalt von bis zu 1.5 Gew% Antischaummittel, bezogen auf das Basispolymerisat, als günstig erwiesen. Flüssige Antischaummittel werden normalerweise der Dispersion vor dem Trocknen zugesetzt, feste können in die trockene Dispersionspulverzusammensetzung eingemischt werden.

Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, versetzt werden. Dies erfolgt vorzugsweise, solange das Pulver noch fein verteilt ist, beispielsweise noch im Trockengas suspendiert ist. Insbesondere wird das Antiblockmittel getrennt aber gleichzeitig mit der Dispersion in die Trocknungsvorrichtung dosiert. Beispiele für Antiblockmittel sind fein gemahlene Aluminiumsilikate, Kieselgur, kolloidales Silicagel, pyrogene Kieselsäure, Fällungskieselsäure, Micro-Silica, Leichtspat, Kaolin, Talkum, Zemente, Diatomeenerde, Calciumcarbonat oder Magnesiumhydrosilikat.

Die erfindungsgemäßen, vernetzbare Schutzkolloide enthaltenden, Polymerdispersionen oder die daraus erhältlichen Dispersionspulver eignen sich als Bindemittel für Beschichtungen, Putze und Anstriche, insbesondere Anstrichfarben; als Klebstoffe oder Bindemittel für Holz, Papier, Textilien und Nonwovens; als Bindemittel bei der Papierherstellung und zur Herstellung von Preßmassen und Formkörper; als Bindemittel zur Verwendung in der Bauindustrie, insbesonders als Zusätze zu Beton, Bauklebern, Mörteln, Spachtelmassen und Verlaufsmassen.

### Beispiele:

### Beispiel 1:

### Herstellung einer ca. 16%igen AMPS-NMA-MMA-Polymerlösung:

Vorbereitung der Monomerdosierlösung: In einem geeigneten Dosiergefäß werden 459 g Wasser vorgelegt und nacheinander die folgenden Stoffe gelöst: 81.5 g einer 25%igen NaOH-Lösung, 0.849 g Mercaptopropionsäure MPS, 4.18 g Methylmethacrylat, 180 g 2-Acrylamido-2-methylpropansulfonsäure AMPS und 69.5 g einer 45%igen N-Methylolacrylamidlösung NMA.
In einem 3 l Laborreaktor ausgerüstet mit Blattrührer, Rückflußkühler und geeigneten Dosiereinrichtungen werden nacheinander vorgelegt: 1.28 kg deionisiertes Wasser, 54.4 g einer 25%igen NaOH-Lösung 0.849 g Mercaptopropionsäure MPS, 112 g feste 2-Acrylamido-2-methyl-propansulfonsäure AMPS, 36.2 g einer 45%igen N-Methylolacrylamid-Lösung NMA und 2.62 g Methylmethacrylat. Die Lösung wird gerührt und auf 80°C aufgeheizt. Die Polymerisation wird gestartet, indem eine 2.2 %ige Ammoniumpersulfatlösung APS über einen Zeitraum von 3 h zudosiert wird. 10 min nach dem Start der APS-Lösung wird die oben beschriebene Monomerdosierlösung innerhalb von 2 h zudosiert. Anschließend wird die Polymerisation bei 90°C vervollständigt. Nach dem Abkühlen wird die Lösung mit NaOH auf pH = 7 eingestellt. Die so hergestellte, klare Lösung besitzt einen Festgehalt von 16.1 %, einen pH-Wert von 7, eine Viskosität von 88 mPas (Brookfield, 20 Upm) und ein mittleres Molekulargewicht von 162000 (GPC; gegen Na-Polystyrolsulfonat-Standards), die Oberflächenspannung der 5%igen wäßrigen Lösung liegt bei 57.5 mNm.

### Beispiel 2:

### Herstellung einer ca. 16%igen AMPS-NMA-STY-Polymerlösung:

Vorbereitung der Monomerdosierlösung: In einem geeigneten Dosiergefäß werden 459 g Wasser vorgelegt und nacheinander die folgenden Stoffe gelöst: 81.5 g einer 25%igen NaOH-Lösung, 0.849 g Mercaptopropionsäure MPS, 4.18 g Styrol, 180 g 2-Acrylamido-2-methylpropansulfonsäure AMPS und 69.5 g einer 45%igen N-Methylolacrylamidlösung NMA.
In einem 3 l Laborreaktor ausgerüstet mit Blattrührer, Rückflußkühler und geeigneten Dosiereinrichtungen werden nacheinander vorgelegt: 1.28 kg deionisiertes Wasser, 54.4 g einer 25%igen NaOH-Lösung 0.849 g Mercaptopropionsäure MPS, 112 g feste 2-Acrylamido-2-methylpropan-sulfonsäure AMPS, 36.2 g einer 45%igen N-Methylolacrylamid-Lösung NMA und 2.62 g Styrol. Die Lösung wird gerührt und auf 80°C aufgeheizt. Die Polymerisation wird gestartet, in dem eine 2.2 %ige Ammoniumpersulfatlösung APS über einen Zeitraum von 3 h zudosiert wird. 10 min nach dem Start der APS-Lösung wird die oben beschriebene Monomerdosierlösung innerhalb von 2 h zudosiert. Anschließend wird die Polymerisation bei 90°C vervollständigt. Nach dem Abkühlen wird die Lösung mit NaOH auf pH = 7 eingestellt. Die so hergestellte, klare Lösung besitzt einen Festgehalt von 15.8 %, einen pH-Wert von 7, eine Viskosität von 48 mPas (Brookfield, 20 Upm) und ein mittleres Molekulargewicht von 450000 (GPC; gegen Na-Polystyrolsulfonat-Standards) die Oberflächenspannung der 5%igen wäßrigen Lösung liegt bei 61.6 mNm.

### Beispiel 3:

### Herstellung einer ca. 16%igen AMPS-NMA-Polymerlösung mit hydrophoben Dodecyl-Endgruppen.

Vorbereitung der Monomerdosierlösung: In einem geeigneten Dosiergefäß werden 455 g Wasser vorgelegt und nacheinander die folgenden Stoffe gelöst: 80.9 g einer 25%igen NaOH-Lösung, 0.843 g Mercaptopropionsäure MPS, 179 g
2-Acrylamido-2-methylpropansulfonsäure AMPS und 68.9 g einer 45%igen N-Methylolacrylamidlösung NMA.
Vorbereitung der Regler-Dosierlösung: In einem geeigneten Dosiergefäß werden 5.39 g Dodecylmercaptan in 48.5 g Aceton gelöst.
In einem 3 l Laborreaktor ausgerüstet mit Blattrührer, Rückflußkühler und geeigneten Dosiereinrichtungen werden nacheinander vorgelegt: 1.21 kg deionisiertes Wasser, 53.9 g einer 25%igen NaOH-Lösung, 12.1 g Aceton, 0.843 g Mercaptopropionsäure MPS, 111 g feste 2-Acrylamido-2-methylpropansulfonsäure AMPS und 36.0 g einer 45%igen N-Methylolacrylamid-Lösung NMA und 1.35 g Dodecylmercaptan. Die Lösung wird gerührt und auf 80°C aufgeheizt. Die Polymerisation wird gestartet, indem eine 2.2 %ige Ammoniumpersulfatlösung APS über einen Zeitraum von 3 h zudosiert wird. 10 min nach dem Start der APS-Lösung werden die oben beschriebene Monomerdosierlösung sowie die Reglerdosierlösung innerhalb von 2 h zudosiert. Anschließend wird die Polymerisation bei 90°C vervollständigt. Nach dem Abkühlen wird die Lösung mit NaOH auf pH = 7 eingestellt. Die so hergestellte, klare Lösung besitzt einen Festgehalt von 16.3 %, einen pH-Wert von 7, eine Viskosität von 49.5 mPas (Brookfield, 20 Upm) und ein mittleres Molekulargewicht von 148000 (GPC; gegen Na-Polystryolsulfonat-Standards), die Oberflächenspannung der 5%igen wäßrigen Lösung liegt bei 63.9 mNm.

### Beispiel 4:

### Herstellung einer ca. 55%igen Ethylen-Vinylacetat-Dispersion mit dem Polymeren aus Beispiel 1 als Schutzkolloid.

Vorbereitung der Monomerdosierlösung: In einem Dosiergefäß werden 633 g Vinylacetat und 32.4 g Butylacrylat gemischt. Vorbereitung der wäßrigen Dosierlösung: In einem Dosiergefäß werden 26.6 g deionisiertes Wasser vorgelegt und nacheinander darin 2.94 g 2-Acrylamido-2-methylpropansulfonsäure (Na-Salz, 50%ige Lösung in Wasser), 32.8 g einer 48 %igen N-Methylolacrylamid-Lösung, 11 g eines i-Tridecylalkoholpolyglycolethers, 5.52 g Acrylsäure und 91.4 g der 16.1%igen wäßrigen Polymerlösung aus Beispiel 1 gelöst und gerührt.
In einem 2 l Laborautoklaven, ausgerüstet mit Rührer und geeigneten Dosiereinrichtungen werden nacheinander vorgelegt: 521 g deionisiertes Wasser, 2.77 g einer 25%igen Na-Vinylsulfonat-Lösung, 1.15 g einer 30%igen Lösung eines Sulfosuccinathalbesters, 10.7 g einer 40%igen Lösung eines Ethyleoxid-Propylenoxid-Ethyleoxid-Blockcopolymeren, 2.21 g einer 48%igen N-Methylolacrylamid-Lösung, 7.36 g Butylacrylat und 63.3 g Vinylacetat. Nachdem der Inhalt des Autoklaven auf 45°C erwärmt ist, wird ein Ethylendruck von 60 bar appliziert und die Polymerisation wird mittels einer 5%igen Ammoniumpersulfat und einer 2.5%igen Ascorbinsäurelösung gestartet. Die Dosierraten der Initiatordosierungen werden entsprechend einer Gesamtdosierdauer von 6 h eingestellt. Der Beginn der Polymerisation wird durch eine exotherme Wärmetönung angezeigt. 10 min nach Reaktionsbeginn wird die Monomerdosierung und die wäßrige Emulgatordosierung eingefahren. Die Dosierraten werden jeweils entsprechend einer Dosierdauer von 4 h gewählt. Nach dem Auspolymerisieren wird der Reaktor entspannt und der pH-Wert auf ca. 5 eingestellt.
Die so hergestellte stippenfreie Polymerdispersion ist folgendermaßen charakterisiert: Feststoffgehalt: 56.1 %, pH: 4.9, Teilchengröße ca. 440 nm, Viskosität: 2980 mPas (Brookfield 20 Upm), Ethylengehalt des Polymerharzes: 21.8 Gew%, Vernetzungsgrad des Polymerfilms: 81.3%.

### Beispiel 5:

### Herstellung einer ca. 55%igen Ethylen-Vinylacetat-Dispersion mit dem Polymeren aus Beispiel 2 als Schutzkolloid.

Vorbereitung der Monomerdosierlösung: In einem Dosiergefäß werden 633 g Vinylacetat und 32.4 g Butylacrylat gemischt. Vorbereitung der wäßrigen Dosierlösung: In einem Dosiergefäß werden 42 ml deionisiertes Wasser vorgelgt und nacheinander 2.94 g 2-Acrylamido-2-methylpropansulfonsäure (Na-Salz, 50%ige Lösung in Wasser), 32.8 g einer 48 %igen N-Methyloacrylamid-Lösung, 11 g eines i-Tridecylalkoholpolyglycolethers, 5.52 g Acrylsäure und 91.4 g der 15.8 %igen wäßrigen Polymerlösung aus Beispiel 2 darin gelöst und gerührt.
In einem 2 l Laborautoklaven, ausgerüstet mit Rührer und geeigneten Dosiereinrichtungen werden nacheinander vorgelegt: 521 g deionisiertes Wasser, 2.77 g einer 25%igen Na-Vinylsulfonat-Lösung, 1.15 g einer 30%igen Lösung eines Sulfosuccinathalbesters, 10.7 g einer 40%igen Lösung eines Ethyleoxid-Propylenoxid-Ethylenoxid-Blockcopolymeren, 2.21 g einer 48%igen N-Methylolacrylamid-Lösung, 7.36 g Butylacrylat und 63.3 g Vinylacetat. Nachdem der Inhalt des Autoklaven auf 45°C erwärmt ist, wird ein Ethylendruck von 60 bar appliziert und die Polymerisation wird mittels einer 5%igen Ammoniumpersulfat- und einer 2.5%igen Ascorbinsäurelösung gestartet. Die Dosierraten der Initiatordosierungen werden entsprechend einer Gesamtdosierdauer von 6 h eingestellt. Der Beginn der Polymerisation wird durch eine exotherme Wärmetönung angezeigt. 10 min nach Reaktionsbeginn wird die Monomerdosierung und die wäßrige Emulgatordosierung eingefahren. Die Dosierraten werden jeweils entsprechend einer Dosierdauer von 4 h gewählt. Nach dem Auspolymerisieren wird der Reaktor entspannt und der pH-Wert auf ca. 5 eingestellt.
Die so hergestellte stippenfreie Polymerdispersion ist folgendermaßen charakterisiert: Feststoffgehalt: 55.2 %, pH: 4.8, Teilchengröße ca. 330 nm, Viskosität: 5450 mPas (Brookfield 20 Upm), Ethylengehalt des Polymerharzes: 17.0 Gew%, Vernetzungsgrad des Polymerfilms: 73.1%.

### Beispiel 6:

### Herstellung einer ca. 55%igen Ethylen-Vinylacetat-Dispersion mit dem Polymeren aus Beispiel 3 als Schutzkolloid.

Vorbereitung der Monomerdosierlösung: In einem Dosiergefäß werden 633 g Vinylacetat und 32.4 g Butylacrylat gemischt. Vorbereitung der wäßrigen Dosierlösung: In einem Dosiergefäß werden 42 ml deionisiertes Wasser vorgelgt und nacheinander 2.94 g 2-Acrylamido-2-methylpropansulfonsäure (Na-Salz, 50%ige Lösung in Wasser), 32.8 g einer 48 %igen N-Methyloacrylamid-Lösung, 11 g eines i-Tridecylalkoholpolyglycolethers, 5.52 g Acrylsäure und 90.3 g der 16.3 %igen wäßrigen Polymerlösung aus Beispiel 3 darin gelöst und gerührt.
In einem 2 l Laborautoklaven, ausgerüstet mit Rührer und geeigneten Dosiereinrichtungen, werden nacheinander vorgelegt: 526 g deionisiertes Wasser, 2.77 g einer 25%igen Na-Vinylsulfonat-Lösung, 1.15 g einer 30%igen Lösung eines Sulfosuccinathalbesters, 10.7 g einer 40%igen Lösung eines Ethyleoxid-Propylenoxid-Ethylenoxid-Blockcopolymeren, 2.21 g einer 48%igen N-Methylolacrylamid-Lösung, 7.36 g Butylacrylat und 63.3 g Vinylacetat. Nachdem der Inhalt des Autoklaven auf 45°C erwärmt ist, wird ein Ethylendruck von 60 bar appliziert und die Polymerisation wird mittels einer 5%igen Ammoniumpersulfat- und einer 2.5%igen Ascorbinsäurelösung gestartet. Die Dosierraten der Initiatordosierungen werden entsprechend einer Gesamtdosierdauer von 6 h eingestellt. Der Beginn der Polymerisation wird durch eine exotherme Wärmetönung angezeigt. 10 min nach Reaktionsbeginn wird die Monomerdosierung und die wäßrige Emulgatordosierung eingefahren. Die Dosierraten werden jeweils entsprechend einer Dosierdauer von 4 h gewählt. Nach dem Auspolymerisieren wird der Reaktor entspannt und der pH-Wert auf ca. 5 eingestellt.
Die so hergestellte stippenfreie Polymerdispersion ist folgendermaßen charakterisiert: Feststoffgehalt: 55.1 %, pH: 4.8, Teilchengröße ca. 320 nm, Viskosität: 5150 mPas (Brookfield 20 Upm), Ethylengehalt des Polymerharzes: 21.6 Gew%, Vernetzungsgrad des Polymerfilms: 88.7%.

### Beispiel 7 (Vergleichsbeispiel):

### Herstellung einer ca. 55%igen Ethylen-Vinylacetat-Dispersion ohne erfindungsgemäßes Schutzkolloid.

Die Herstellung erfolgte analog zu den Beispielen 4-6, jedoch ohne daß eines der erfindungsgemäßen Schutzkolloide eingesetzt wurde.
Die so hergestellte stippenfreie Polymerdispersion ist folgendermaßen charakterisiert: Feststoffgehalt: 53.9 %, pH: 4.7, Teilchengröße ca. 310 nm, Viskosität: 1380 mPas (Brookfield 20 Upm), Ethylengehalt des Polymerharzes: 20.9 Gew%, Vernetzungsgrad des Polymerfilms: 73.7%.

### Anwendungstechnische Prüfung:

Mit den Polymerdispersionen aus Beispiel 4 bis 7 wurden Zellwoll-Tissues getränkt, abgequetscht und anschließend 3 Minuten bei 150°C getrocknet (Bindemittelauftrag 29.5 %). Die Festigkeit des so gebundenen Vlieses wurde in Querrichtung geprüft. Die Prüfungen wurden mit dem trockenen Vlies sowie nach je einer Minute Lagerung in Wasser bzw. Isopropanol durchgeführt. Dazu wurden jeweils 3 Vliesstreifen von 150 mm Länge auf 15 mm Breite übereinandergelegt und gemeinsam geprüft. Die Meßbedingungen waren wie folgt: Einspannlänge 100 mm, Einspannbreite 15 mm, Meßgeschwindigkeit 100 mm/min. Als Meßwert wurde die Höchstzugkraft dokumentiert, das heißt die höchste im Rahmen der Messung erreichte Zugkraft. Die Ergebnisse sind in Tabelle I zusammengefaßt:

**TABELLE I:**

| Beispiel | HZK(trocken) [N] | HZK (Wasser-naß) [N] | HZK(naß) (i-Propanol) [N] |
|---|---|---|---|
| 4 | 19.0 | 9.8 | 5.9 |
| 5 | 20.6 | 11.6 | 8.0 |
| 6 | 21.6 | 11.9 | 7.7 |
| 7 (Vergl.) | 18.5 | 9.7 | 6.5 |
| HZK = Höchstzugkraft; N = Newton | | | |

Aus den Beispielen 4 - 6 einerseits und dem Beispiel 7 (Vergleichsbeispiel ohne erfindungsgemäße
Polyelektrolytschutzkolloide) ist klar ersichtlich, daß mit den erfindungsgemäßen, vernetzbaren Schutzkolloiden hergestellte vernetzbare Ethylen-Vinylacetat-Copolymerisate eine deutlich verbesserte Wasser-Naß-Festigkeit und Lösemittelfestigkeit in Isopropanol zeigen, im Vergleich zu auf herkömmliche Weise synthetisierten vernetzbaren Ethylen-Vinylacetat-Copolymerisaten.

## Patentansprüche

1. Wasserlösliche, vernetzbare Schutzkolloide mit einem Molekulargewicht von < 500000 enthaltend
a) 20 bis 95 Gew% Sulfonsäure- oder Sulfonatgruppenhaltige Monomereinheiten,
b) mindestens 4 Gew% N-Methylol- oder N-Alkoxymethylgruppenhaltige Monomereinheiten,
c) 0.1 bis 20 Gew% hydrophobe Monomereinheiten aus der Gruppe der wasserunlöslichen, ethylenisch ungesättigten Verbindungen und der hydrophoben Endgruppen von Initiatorresten oder Reglermolekülen,
wobei die Anteile in Gew% auf das Gesamtgewicht des Copolymerisats bezogen sind, und
wobei der Anteil an Sulfonsäure-/Sulfonatgruppenhaltigen Monomereinheiten gegebenenfalls zu bis zu 50 Gew%, bezogen auf den Gewichtsanteil der Monomereinheiten a), durch Carboxylgruppenhaltige Monomereinheiten d) oder Amidgruppenhaltige Monomereinheiten e) substituiert werden kann.

2. Wasserlösliche, vernetzbare Schutzkolloide nach Anspruch 1, dadurch gekennzeichnet, daß
a) 70 bis 87 Gew% Sulfonsäure- oder Sulfonatgruppenhaltige Monomereinheiten,
b) 12 bis 25 Gew% N-Methylol- oder N-Alkoxymethylgruppenhaltige Monomereinheiten,
c) 1 bis 5 Gew% hydrophobe Monomereinheiten aus der Gruppe der wasserunlöslichen, ethylenisch ungesättigten Verbindungen, enthalten sind.

3. Wasserlösliche, vernetzbare Schutzkolloide nach Anspruch 1 oder 2, dadurch gekennzeichnet, daß als Monomereinheiten a) 2-Acrylamido-2-methylpropansulfonsäure, Styrolsulfonsäure, Acrylsäuresulfopropylester, Itaconsäuresulfopropylester, Vinylsulfonsäure oder deren Ammonium-, Natrium-, Kalium- und Calciumsalze enthalten sind; als Monomereinheiten b) N-Methylolacrylamid, N-Methylolmethacrylamid, N-(Isobutoxymethyl)-acrylamid,N-(Isobutoxymethyl)-methacrylamid oder N-(n-Butoxymethyl)-acrylamid enthalten sind; und als Monomereinheiten c) Methylmethacrylat, Styrol, Vinylpropionat, Isopropenylacetat, Vinyllaurat oder Vinylester von α-verzweigten Monocarbonsäuren mit 5 bis 10 C-Atomen enthalten sind.

4. Verfahren zur Herstellung von schutzkolloidstabilisierten wäßrigen Polymerisatdispersionen durch radikalische Polymerisation von ethylenisch ungesättigten Monomeren nach dem Suspensions- oder Emulsionspolymerisationsverfahren, dadurch gekennzeichnet, daß die Polymerisation in Gegenwart zumindest eines vernetzbaren Schutzkolloids gemäß Anspruch 1 bis 3 durchgeführt wird.

5. Verfahren nach Anspruch 4, dadurch gekennzeichnet, daß die Polymerisation nach dem Emulsionspolymersationsverfahren durchgeführt wird, in Gegenwart von einem oder mehreren Monomeren aus der Gruppe der Vinylester von unverzweigten oder verzweigten Carbonsäuren mit 1 bis 18 C-Atomen, der Ester von Acrylsäure und Methacrylsäure mit unverzweigten oder verzweigten Alkoholen mit 1 bis 18 C-Atomen, der Vinylaromaten, der Vinylhalogenide und der Olefine.

6. Wäßrige Polymerdispersionen von Polymerisaten ethylenisch ungesättigter Monomere, welche 0.1 bis 20 Gew% eines oder mehrerer Schutzkolloide gemäß Anspruch 1 bis 3, bezogen auf den Festgehalt an Polymerisat, enthalten.

7. Wäßrige Polymerisatdispersionen gemäß Anspruch 6, dadurch gekennzeichnet, daß ein oder mehrere Vinylester-Polymerisate oder (Meth)acrylsäureester-Polymerisate enthalten sind, welche gegebenenfalls noch 0.5 bis 5.0 Gew%, bezogen auf das Gesamtgewicht der Polymerisate, vernetzend wirkende Comonomereinheiten aus der Gruppe N-Methylolacrylamid, N-Methylolmethacrylamid, N-(Alkoxymethyl)acrylamide oder N-(Alkoxymethyl)methacrylamide mit einem C₁- bis C₆-Alkylrest aufweisen.

8. Wäßrige Polymerisatdispersionen gemäß Anspruch 7, dadurch gekennzeichnet, daß ein Vinylacetat-Ethylen-Copolymerisat mit einem Ethylengehalt von 5 bis 50 Gew% und einem Gehalt von 0.5 bis 5.0 Gew% eines oder mehrerer Comonomere aus der Gruppe N-Methylolacrylamid, N-Methylolmethacrylamid, N-(isobutoxymethyl)-acrylamid, N-(isobutoxymethyl)-methacrylamid, N-(n-butoxymethyl)-acrylamid, N-(n-butoxymethyl)-methacrylamid enthalten ist.

9. In Wasser redispergierbare Polymerpulver-Zusammensetzungen erhältlich durch Sprühtrocknen einer wäßrigen Polymerisatdispersion gemäß Anspruch 6 bis 8.

10. Verwendung der Polymerdispersionen gemäß Anspruch 6 bis 8 und der redispergierbaren Polymerpulver-Zusammensetzungen gemäß Anspruch 9 als Bindemittel für Beschichtungen, Putze und Anstriche, insbesondere Anstrichfarben; als Klebstoffe und Bindemittel für Holz, Papier, Textilien und Nonwovens; als Bindemittel bei der Papierherstellung und zur Herstellung von Preßmassen und Formkörper; als Bindemittel zur Verwendung in der Bauindustrie, insbesonders als Zusätze zu Beton, Bauklebern, Mörteln, Spachtelmassen und Verlaufsmassen.

## Claims

1. Water-soluble, crosslinkable protective colloids having a molecular weight of < 500,000 comprising
a) 20 to 95 % by weight of monomer units containing sulphonic acid or sulphonate groups,
b) at least 4 % by weight of monomer units containing N-methylol or N-alkoxymethyl groups,
c) 0.1 to 20 % by weight of hydrophobic monomer units from the group consisting of water-insoluble, ethylenically unsaturated compounds and the hydrophobic end groups of initiator radicals or regulator molecules,
the contents in % by weight being based on the total weight of the copolymer, and
it being possible, where appropriate, for up to 50 % by weight, based on the weight content of monomer units a), of the content of monomer units containing sulphonic acid/sulphonate groups to be replaced by monomer units d) containing carboxyl groups or monomer units e) con-taining amide groups.

2. Water-soluble, crosslinkable protective colloids according to Claim 1, characterized in that they comprise
a) 70 to 87 % by weight of monomer units containing sulphonic acid or sulphonate groups,
b) 12 to 25 % by weight of monomer units containing N-methylol or N-alkoxymethyl groups,
c) 1 to 5 % by weight of hydrophobic monomer units from the group consisting of water-insoluble, ethylenically unsaturated compounds.

3. Water-soluble, crosslinkable protective colloids according to Claim 1 or 2, characterized in that they comprise, as monomer units a), 2-acrylamido-2-methylpropanesulphonic acid, styrenesulphonic acid, sulphopropyl acrylate, sulphopropyl itaconate, vinylsulphonic acid or ammonium, sodium, potassium and calcium salts thereof; as monomer units b), N-me-thylolacrylamide, N-methylolmethacrylamide, N-(isobutoxymethyl)-acrylamide, N-(isobutoxymethyl)-methacrylamide or N-(n-butoxymethyl)-acrylamide; and as monomer units c), methyl methacrylate, styrene, vinyl propionate, isopropenyl acetate, vinyl laurate or vinyl esters of α-branched monocarboxylic acids having 5 to 10 C atoms.

4. Process for the preparation of aqueous polymer dispersions stabilized by protective colloids by free radical polymerization of ethylenically unsaturated monomers by the suspension or emulsion polymerization process, characterized in that the polymerization is carried out in the presence of at least one crosslinkable protective colloid according to Claims 1 to 3.

5. Process according to Claim 4, characterized in that the polymerization is carried out by the emulsion polymerization process in the presence of one or more monomers from the group consisting of vinyl esters of unbranched or branched carboxylic acids having 1 to 18 C atoms, esters of acrylic acid and methacrylic acid with unbranched or branched alcohols having 1 to 18 C atoms, vinylaromatics, vinyl halides and olefins.

6. Aqueous polymer dispersions of polymers of ethylenically unsaturated monomers which comprise 0.1 to 20 % by weight of one or more protective colloids according to Claims 1 to 3, based on the solids content of polymer.

7. Aqueous polymer dispersions according to Claim 6, characterized in that they comprise one or more vinyl ester polymers or (meth)acrylic acid ester polymers which also contain, if appropriate, 0.5 to 5.0 % by weight, based on the total weight of the polymers, of comonomer units having a crosslinking action from the group consisting of N-methylolacrylamide, N-methylolmethacrylamide, N-(alkoxymethyl)acrylamides and N-(alkoxymethyl)methacrylamides with a C₁- to C₆-alkyl radical.

8. Aqueous polymer dispersions according to Claim 7, characterized in that they comprise a vinyl acetate/ ethylene copolymer having an ethylene content of 5 to 50 % by weight and a content of 0.5 to 5.0 % by weight of one or more comonomers from the group consisting of N-methylolacrylamide, N-methylolmethacrylamide, N-(isobutoxymethyl)-acrylamide, N-(isobutoxymethyl)-methacrylamide, N-(n-butoxymethyl)-acrylamide and N-(n-butoxymethyl)-methacrylamide.

9. Polymer powder compositions which are redispersible in water and are obtainable by spray drying an aqueous polymer dispersion according to Claims 6 to 8.

10. Use of the polymer dispersions according to Claims 6 to 8 and of the redispersible polymer powder compositions according to Claim 9 as binders for coatings, plasters and coverings, in particular paints; as adhesives and binders for wood, paper, textiles and nonwovens; as binders in papermaking and for the production of compression moulding compositions and shaped articles; and as binders for use in the building industry, in particular as additives to concrete, building adhesives, mortars, filling compositions and flow control compositions.

## Revendications

1. Colloïdes de protection réticulables, solubles dans l'eau, d'un poids moléculaire < 500 000, contenant:
a) de 20 à 95 % en poids d'unités monomères contenant des groupements acide sulfonique ou sulfonate,
b) au moins 4 % en poids d'unités monomères contenant des groupements N-méthylol ou N-alkoxyméthyle,
c) de 0,1 à 20 % en poids d'unités monomères hydrophobes du groupe des composés éthyléniquement insaturés, insolubles dans l'eau et des groupements terminaux hydrophobes de radicaux d'initiateur ou de molécules de régulateur,
les proportions en % en poids étant calculées par rapport au poids total du copolymère, et
la proportion en unités monomères contenant des groupements acide sulfonique ou sulfonate pouvant le cas échéant être remplacée jusqu'à 50 % en poids, calculée par rapport à la proportion pondérale des unités monomères a), par des unités monomères d) contenant des groupements carboxyle ou par des unités monomères e) contenant des groupements amide.

2. Colloïdes de protection réticulables, solubles dans l'eau selon la revendication 1, caractérisés en ce qu'ils contiennent :
a) de 70 à 87 % en poids d'unités monomères contenant des groupements acide sulfonique ou sulfonate,
b) de 12 à 25 % en poids d'unités monomères contenant des groupements N-méthylol ou N-alcoxyméthyle,
c) de 1 à 5 % en poids d'unités monomères hydrophobes du groupe des composés éthyléniquement insaturés, insolubles dans l'eau.

3. Colloïdes de protection réticulables, solubles dans l'eau selon la revendication 1 ou 2, caractérisés en ce qu'ils contiennent comme unités monomères a) l'acide 2-acrylamido-2-méthylpropane sulfonique, l'acide styrènesulfonique, l'ester sulfopropylique d'acide acrylique, l'ester sulfopropylique d'acide itaconique, l'acide vinylsulfonique ou leurs sels d'ammonium, de sodium, de potassium et de calcium; comme unités monomères b) le N-méthylolacrylamide, le N-méthylolméthacrylamide, le N-(isobutoxyméthyl)acrylamide, le N-(isobutoxyméthyl)méthacrylamide ou le N-(n-butoxyméthyl)acrylamide; et comme unités monomères c) le méthacrylate de méthyle, le styrène, le propionate de vinyle, l'acétate d'isopropényle, le laurate de vinyle ou des esters vinyliques d'acides monocarboxyliques ramifiés en a contenant de 5 à 10 atomes de carbone.

4. Procédé de préparation de dispersions aqueuses polymères stabilisées par des colloïdes de protection, par polymérisation radicalaire de monomères éthyléniquement insaturés selon le procédé de polymérisation en suspension ou en émulsion, caractérisé en ce que la polymérisation est réalisée en présence d'au moins un colloïde de protection réticulable selon les revendications 1 à 3.

5. Procédé selon la revendication 4, caractérisé en ce que la polymérisation est réalisée selon le procédé de polymérisation en émulsion en présence d'un ou de plusieurs monomères du groupe des esters vinyliques d'acides carboxyliques ramifiés ou non ramifiés contenant de 1 à 18 atomes de carbone, des esters d'acide acrylique et d'acide méthacrylique avec des alcools ramifiés ou non ramifiés contenant de 1 à 18 atomes de carbone, des composés aromatiques vinyliques, des halogénures vinyliques et des oléfines.

6. Dispersions aqueuses polymères obtenues à partir de polymères de monomères éthyléniquement insaturés, qui contiennent de 0,1 à 20 % en poids, calculés par rapport à la teneur en solides de polymère, d'un ou plusieurs colloïdes de protection selon les revendications 1 à 3.

7. Dispersions aqueuses polymères selon la revendication 6, caractérisées en ce qu'elles contiennent un ou plusieurs polymères d'ester vinylique ou polymère d'ester d'acide (méth)acrylique, qui présentent éventuellement encore de 0,5 à 5,0 % en poids, calculés par rapport au poids total des polymères, d'unités comonomères exerçant une action de réticulation du groupe du N-méthylolacrylamide, du N-méthylolméthacrylamide, des N-(alcoxyméthyl)acrylamides ou des N-(alcoxyméthyl)méthacrylamides avec un radical alkyle en C₁ à C₆.

8. Dispersion aqueuse polymère selon la revendication 7, caractérisée en ce qu'elle contient un copolymère d'acétate de vinyle/éthylène avec une teneur en éthylène de 5 à 50 % en poids et une teneur de 0,5 à 5,0 % en poids d'un ou plusieurs comonomères du groupe du N-méthylolacrylamide, du N-méthylolméthacrylamide, du N-(isobutoxyméthyl)acrylamide, du N-(isobutoxyméthyl) méthacrylamide, du N-(n-butoxyméthyl)acrylamide ou du N-(n-butoxyméthyl)méthacrylamide.

9. Compositions de poudre de polymère redispersables dans l'eau, obtenues par séchage par pulvérisation d'une dispersion aqueuse polymère selon les revendications 6 à 8.

10. Utilisation des dispersions polymères selon les revendications 6 à 8 et des compositions de poudre de polymère redispersables selon la revendication 9, comme liants pour des revêtements, des enduits et des peintures, en particulier des peintures de couleur; comme colles et liants pour bois, papier, textiles et non-tissés; comme liants dans la fabrication de papier et pour la préparation de matières moulées et de corps moulés; comme liants pour usage dans l'industrie de la construction, en particulier comme additifs au béton, aux colles pour la construction, mortiers, mastics et matières de lissage.
